# EUROPEAN PATENT SPECIFICATION

(11) **EP 0 824 206 B1**
(45) Date of publication and mention of the grant of the patent: **20.10.2004**
(21) Application number: 97202482.2
(22) Date of filing: 11.08.1997
(51) Int. Cl.: F16T 1/24

(54) **Liquid forced-feed apparatus**
Unter Druck betriebene Speisevorrichtung für Flüssigkeiten
Dispositif d'alimentation forcée d'un liquide

(30) Priority: 13.08.1996 JP 23257396
(43) Date of publication of application: 18.02.1998
(73) Proprietor: TLV CO. LTD., Kakogawa 675 (JP)
(72) Inventor: Yumoto, Hideaki, Kakogawa 675 (JP)
(74) Representative: Smulders, Theodorus A.H.J., Ir.

(56) References cited:
- EP-A- 0 555 712
- EP-A- 0 709 607
- US-A- 1 327 939
- US-A- 1 844 450
- PATENT ABSTRACTS OF JAPAN vol. 1995, no. 04, 31 May 1995 (1995-05-31) & JP 07 019398 A (TLV CO LTD), 20 January 1995 (1995-01-20)

## Description

### BACKGROUND OF THE INVENTION

### FIELD OF THE INVENTION

The present invention relates to a liquid forced-feed apparatus comprising the features of the preamble of claim 1. Such a type of liquid forced-feed apparatus is known from US-A-1,844,450. The invention also relates to a method of force feeding a liquid. The liquid forced-feed apparatus of the present invention is particularly suitable for use as an apparatus collecting condensate generated in a steam piping system, and then sending the condensate to a boiler or a waste heat recovery system.

### DESCRIPTION OF THE PRIOR ART

The condensate generated as a result of condensation of steam in a steam piping system, or various other types of equipment using steam, in most cases still has a considerable quantity of heat. Therefore it has been a widespread practice to use a condensate recovery system for effective utilization of this thermal energy, by collecting the condensate having a large quantity of heat in a liquid forced-feed apparatus and sending the collected condensate to the boiler or the waste heat recovery system, for effective utilization of the stored thermal energy.

The liquid forced-feed apparatuses used in prior art condensate recovery systems collect the condensate in a hermetic vessel, and introduce a high-pressure working or motive fluid, such as steam, compressed air, or other fluids, into the hermetic vessel by operating a change-over valve. The liquid forced-feed apparatuses discharge the condensate from inside of the hermetic vessel under the pressure of the working fluid and at the same time supply the condensate to a condensate recovery section.

This type of liquid forced-feed apparatus has been disclosed, for instance, in Japanese Utility Model Publication No. 37-22378.

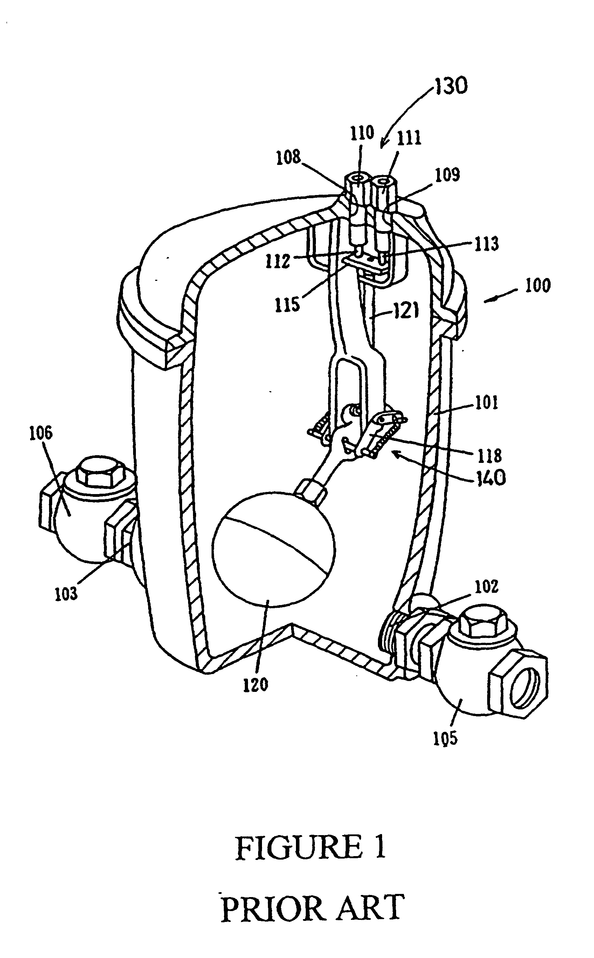

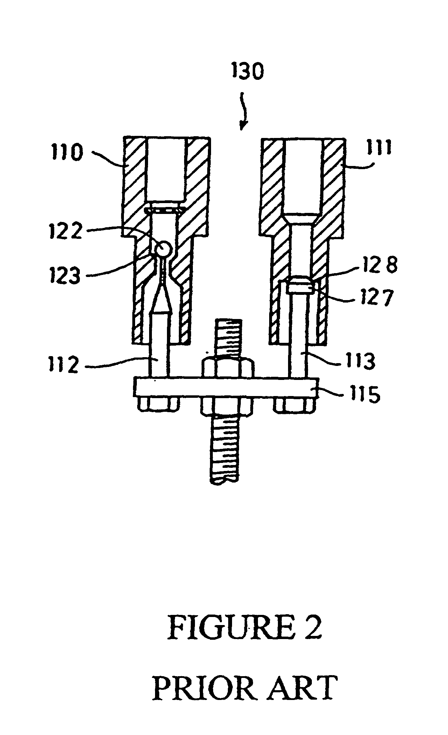

The liquid forced-feed apparatus described above will be explained with reference to Figs. 1 and 2. Fig. 1 is a general perspective view, partly sectioned, of the liquid forced-feed apparatus of the prior art. Fig. 2 is an enlarged sectional view of a valve section of the liquid forced-feed apparatus of the prior art. In these drawings, reference numeral 100 refers to a liquid forced-feed apparatus. The liquid forced-feed apparatus 100 incorporates a float 120 and a working steam inlet valve 110, which are built in a hermetic vessel 101.

The hermetic vessel 101 is provided with a forced-feed liquid inflow port 102 and a forced-feed liquid outflow port 103, which are fitted with check valves 105 and 106 respectively. The check valve 105 is mounted in a direction allowing the liquid to flow into the hermetic vessel 101, while the check valve 106 is mounted in a direction allowing the liquid to be discharged out from the hermetic vessel 101.

In the top of the hermetic vessel 101 are formed the working steam inlet port 108 and the working steam outflow port 109, where, as shown in Figs. 1 and 2, a working steam inlet valve 110 and a working steam discharge valve 111 are mounted. Here, the working steam inlet valve 110 and the working steam discharge valve 111 are opened and closed by moving the valve lifting rods 112 and 113 up and down. The working steam inlet valve 110 is opened when the valve lifting rod 112 is raised, while the working steam discharge valve 111 is closed when the valve lifting rod 113 is raised. The valve lifting rods 112 and 113 are connected in parallel by a connecting plate 115. The working steam inlet valve 110 and the working steam discharge valve 111 are simultaneously opened and closed by moving the connecting plate 115 up and down.

In the prior art liquid forced-feed apparatus 100 the forced-feed liquid inflow port 102 is connected to a steam load (a condensate generating section), via the check valve 105, and the forced-feed liquid outflow port 103 is connected to an apparatus using or recovering waste heat, via the check valve 106. The working steam inlet port 108 is connected to a high-pressure steam source, thereby providing a working fluid. In the liquid forced-feed apparatus 100, when no condensate is present in the hermetic vessel 101, the float 120 is in the lower position, and the connecting plate 115 is down. Therefore, in the working steam inlet valve 110 the valve lifting rod 112 lowers, so that ball valve body 122 mounted on the top end of the valve lifting rod 112 seats on the valve seat 123 to thereby close the opening. On the other hand, in the working steam discharge valve 111, the circular valve head 127 at the top end of the valve lifting rod 113 moves away from the valve seat 128, to thereby open the working steam outflow port 109.

If condensate is generated in the steam load connected to the liquid forced-feed apparatus 100, the condensate flows into the hermetic vessel 101 via the check valve 105 and accumulates in the vessel 101. As the amount of the condensate increases, the float 120 rises. With the rise of the float 120, one end of the arm 118 also rises. If the arm 118 goes up over a specific level, a snap mechanism 140 turns over to raise the rod 121, thereby raising the connecting plate 115. When the connecting plate 115 is raised, the valve lifting rod 112 mounted to the connecting plate 115 in the working steam inlet valve 110 rises to move the valve head 122 away from the valve seat 123, thereby opening the working steam inlet port 108. In the liquid forced-feed apparatus 100, the working steam flows through the opening of the valve seat 123 and through a gap between the valve lifting rod 112 and the valve case 130, being ejected downwardly through the opening provided in the lower end of the valve case 130. At this time, the working steam discharge valve 111 is in a closed position, and therefore the pressure in the hermetic vessel 101 increases to force out the condensate through the liquid outflow port 103. In this liquid forced-feed apparatus 100, the working steam is emitted downwardly from the lower end of the valve case 130 as described above, and therefore most of the working steam is forced into direct contact with the liquid accumulated in the hermetic vessel 101.

In the prior art liquid forced-feed apparatus, because the steam as a working fluid is directly ejected in a direction toward the liquid in the hermetic vessel 101, the working fluid partly is ejected directly into the liquid in the hermetic vessel 101. Steam, when used as the working fluid, therefore is ejected and flows into the cooler liquid, resulting in the steam being condensed. Therefore, the pressure in the hermetic vessel takes time before increasing to a high enough level to force feed the liquid from the hermetic vessel 101, because the steam pressure is reduced by condensation caused by contact of the steam with the cooler liquid. Consequently time is required for liquid to be fed from the hermetic vessel 101.

US-A-1 844 450 discloses a liquid forced-feed apparatus, comprising a vessel with a working fluid inlet port and a working fluid outlet port which are alternately opened and closed by a changeover valve, which is connected to a liquid level detecting device. The apparatus further comprises a cylindrical working fluid deflecting device, mounted between the working fluid inlet port and the interior of the vessel and provided with perforations around its circumference for deflecting working fluid away from the liquid surface within the vessel. Said working fluid deflecting device comprises a working fluid inlet valve body and a working fluid inlet valve seat, said seat being of constant diameter.

### SUMMARY OF THE INVENTION

It is an object of the present invention to provide a liquid forced-feed apparatus and a method of force-feeding a liquid capable of rapidly increasing the pressure in the hermetic vessel upon opening of the working fluid inlet port, to thereby force-feed the liquid from the hermetic vessel within a short period of time.

It is another object of the present invention to provide a liquid forced-feed apparatus and a method of force-feeding a liquid which are usable in a wide range of working fluid pressures from are low to high for the steam, compressed air, etc. flowing in at the working fluid inlet port. The liquid forced-feed apparatus respectively the method provided by the present invention comprises the features of claim 1, respectively of claim 8. Preferred embodiments of the invention are defined in dependent claims 1 to 7, respectively 9 to 12.

### BRIEF DESCRIPTION OF THE DRAWINGS

The above objects and characteristics of the embodiment of the present invention will be described with reference to the accompanying drawings, in which:
Fig. 1 is a partly sectioned perspective view showing a prior art liquid forced-feed apparatus;
Fig. 2 is an enlarged sectional view of a valve section of the liquid forced-feed apparatus of Fig. 1;
Fig. 3 is a general sectional view showing an embodiment of a liquid forced-feed apparatus of the present invention;
Fig. 4 is a partly enlarged sectional view of a primary portion of a prior art valve section; and
Fig. 5 is a sectional view of a primary portion of an embodiment of the liquid forced-feed apparatus of the present invention.

### DETAILED DESCRIPTION OF THE INVENTION

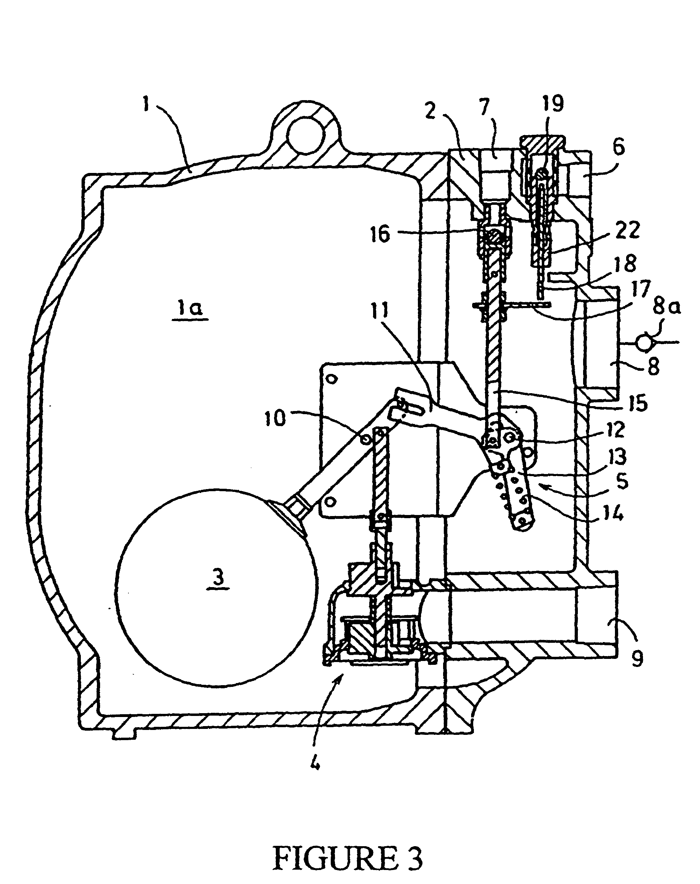

A preferred embodiment of a liquid forced-feed apparatus according to the present invention will now be described by referring to the accompanying drawings. As shown in Fig. 3, in the liquid forced-feed apparatus of the present invention includes a hermetic vessel 1a, a body 1 and a cover 2. Within the apparatus a float 3, a float valve 4, and a snap mechanism section 5 are arranged. A working fluid inlet port 6, a working fluid outflow port 7, a forced-feed liquid inflow port 8, and a forced-feed liquid outflow port 9 are provided in the cover 2. The forced-feed liquid inflow port 8 is connected to an appropriate forced-feed liquid generating source (not shown) via a check valve 8a which permits the flow of the liquid only into the hermetic vessel 1a.

The float 3 is arranged so as to move up and down on the center of the fulcrum 10, to thereby move the float valve 4 of a double valve mechanism up and down to close and open the forced-feed liquid outflow port 9 with respect to the interior of the hermetic vessel 1a, and to move the first lever 11 up and down around the fulcrum 12. A second lever 13 is disposed to rotate on the fulcrum 12. Between the end of the second lever 13 and the end of the first lever 11 a coil spring 14 is mounted, in a compressed state. An operating rod 15 is connected to the upper part of the second lever 13.

On the upper portion of the operating rod 15 a ball-shaped outflow valve body 16 for opening and closing the working fluid outflow port 7 is mounted. On the middle of the operating rod 15 an operating lever 17 is mounted. The upper portion of the operating lever 17 is adjacent a working fluid inlet rod 18, which is vertically movably mounted. Above the upper portion of the working fluid inlet rod 18 a freely-moving ball-shaped working fluid inlet valve body 19 is disposed.

The condensate generated in a steam piping system and in an apparatus using steam (not shown) goes into the hermetic vessel 1a from the forced-feed liquid inflow port 8 via a check valve 8a. As the liquid level in the hermetic vessel 1a rises, the float 3 also rises, thereby slightly opening the float valve 4. With further rise of the liquid level, the float 3 continues to rise finally snapping the snap mechanism 5 to move the operating rod 15 instantly upward. With the upward movement of the operating rod 15, the working fluid outflow port 7 is closed by the working fluid outflow valve body 16 and at the same time the working fluid inlet port 6 is opened by the working fluid inlet rod 18, thereby allowing a working fluid, such as high-pressure steam or compressed air, to flow into the hermetic vessel 1a and thus forcing out the accumulated liquid via the float valve 4 and the forced-feed liquid outflow port 9.

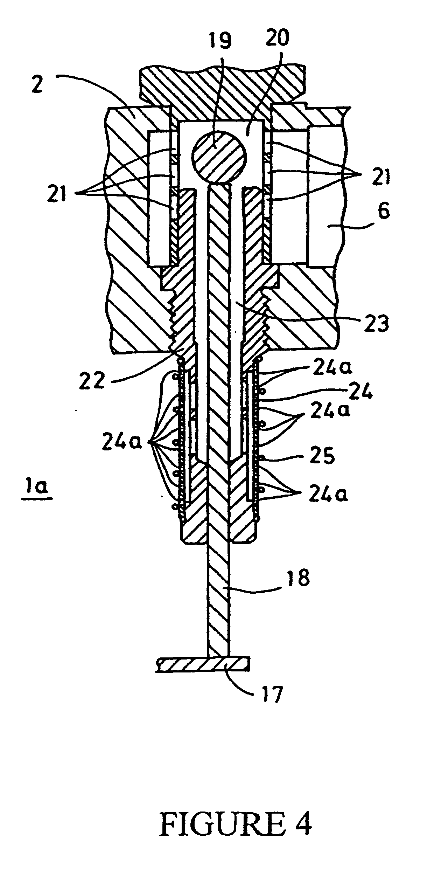

The working fluid inlet port 6, as shown in Fig. 4, is connected to the inlet valve chamber 20 in which the freely-moving working fluid inlet valve body 19 is disposed through an inlet valve chamber 20 and passages 21. Furthermore, the working fluid inlet port 6 is connected to the interior of the hermetic vessel 1a through a straight pipe section 23 of the inlet port member 22 and a cylindrical perforated member 24. The straight pipe section 23 includes lateral openings, substantially parallel to the surface of condensate in the vessel 1a, leading to perforated member 24. The cylindrical perforated member 24 has a multitude of small-diameter pores 24a, and preferably has a larger passage area than the passage area of the straight pipe section 23. On the outer periphery and the lower end section of the cylindrical perforated member 24, a coil spring 25 is mounted to secure the cylindrical perforated member 24 to the inlet port member 22.

The working fluid inlet valve body 19, as shown in Fig. 4, is of such a design that, with the upward movement of the working fluid inlet rod 18, the straight pipe section 23 is connected to the inlet valve chamber 20, to thereby supply the high-pressure working fluid from the working fluid inlet port 6 into the hermetic vessel 1a.

The steam to be supplied from the straight pipe section 23 into the hermetic vessel 1a is divided into many streams by the multitude of small-diameter pores 24a while passing through the cylindrical perforated member 24, and therefore the steam stream is diverted in the horizontal direction substantially parallel to the surface of condensation in the vessel 1a. Thus, the steam stream does not condense because it does not come into direct contact with the cooler surface of the forced-feed liquid in the hermetic vessel 1a. As a result, the steam spreads around the entire upper area of the forced-feed liquid in the vessel 1a, to build up a pressure sufficient for rapid forced-feeding of the liquid, and is not ejected directly into the condensate.

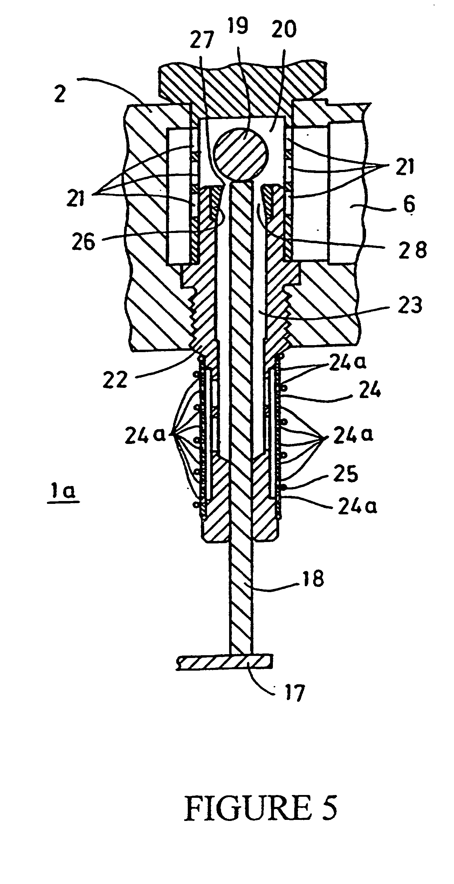

In Fig. 5, an embodiment of the working fluid inlet port 6 of the present invention is shown, which also has the passage 21, the inlet valve chamber 20, the straight pipe section 23, and the cylindrical perforated member 24, and is connected to the hermetic vessel 1a in a manner similar to the embodiment shown in Fig. 4. In the embodiment of Fig. 5, a ring-shaped member 26 is mounted on the upper end of the straight pipe section 23, so that the upper end 27 of the ring-shaped member 26 has the smallest cross-sectional area, and the upper end 27 serves as a valve seat section on which the working fluid inlet valve body 19 is seated. The inner peripheral surface 28 of the ring-shaped member 26 has a divergent section gradually expanding as the flow direction. The flow passage extends from the smallest cross-sectional area section of the upper end 27 to the hermetic vessel 1a via the divergent inner peripheral surface 28, the straight pipe section 23, and the cylindrical perforated member 24.

In the embodiment of Fig. 5, when the working fluid inlet valve body 19 moves away from the upper end 27 of the ring-shaped member 26, the surface receiving a high working fluid pressure becomes smaller in area by the amount of decrease in the sectional area of the upper end 27. Even when high working fluid pressure is used, therefore, it is possible to move the working fluid inlet valve body 19 away from the upper end 27 to open the valve by the driving force of the operating rod 15 and the working fluid inlet rod 18.

Furthermore in the embodiment of Fig. 5, the flow velocity of the high-pressure steam is reduced, and the steam is dispersed, by the cylindrical perforated member 24. The high-pressure steam that has passed the upper end 27 of the smallest sectional area flows down through the divergent inner peripheral surface 28, to thereby change the velocity energy of the high-pressure steam into a pressure energy, thus reaching the upper part of the forced-feed liquid within the hermetic vessel 1a. The high-pressure steam achieves a great pressure so as to force-feed the liquid at a high velocity without going down under the liquid surface and condensing.

As the liquid level within the hermetic vessel 1a lowers with the forced-feed of liquid, the float 3 also goes downward. When the float 3 has reached a certain lower position, the snap mechanism 5 snaps again to the opposite side, thereby closing the working fluid inlet port 6 and opening the working fluid outflow port 7 as shown in Fig. 3. Thus the float valve 4 is closed to stop force-feeding the liquid. At the same time, the liquid flows down again from the forced-feed liquid inflow port 8 into the hermetic vessel 1a, repeating the above-described cycle of operation.

A liquid forced-feed apparatus capable of feeding a liquid with force from a hermetic vessel in a short period of time is provided by the present invention as described above. It should be noticed that the above embodiment has been given only as an instance and therefore the present invention is not limited to the embodiment described above. For instance, in the above embodiment, the cylindrical porous member has been used to deflect and disperse the working fluid, but the shape is not limited to a cylinder; for instance it is possible to deflect or disperse the working fluid by the use of a deflecting plate or a multilayer meshed member. In addition, the working fluid could be dispersed in any direction between a direction substantially parallel to the liquid surface to a direction which is perpendicular to, and away from, the liquid surface.

## Claims

1. A liquid forced-feed apparatus, comprising:
- a vessel (1) having a working fluid inlet port (6), a working fluid outflow port (7), a forced-feed liquid inflow port (8), and a forced-feed liquid outflow port (9);
- a liquid level detecting device (3) for detecting a liquid level of a liquid surface within the vessel (1);
- a changeover valve connected to the liquid level detecting device (3), the changeover valve closing the working fluid outflow port (7) when the working fluid inlet port (6) is opened, the changeover valve opening the working fluid outflow port (7) when the working fluid inlet port (6) is closed;
- a working fluid deflecting device mounted between the working fluid inlet port (6) and the interior of the vessel (1), the working fluid deflecting device deflecting fluid flowing from the working fluid inlet port away from the liquid surface, thereby preventing direct contact of the working fluid with the liquid surface within the vessel (1) when the working fluid is fed into the vessel (1) from the working fluid inlet port (6), **characterised in that** the working fluid deflecting device comprises a working fluid inlet valve body (19) and a working fluid inlet valve seat located at the working fluid inlet port (6), the working fluid inlet port (6) comprising a divergent section (28) located downstream of the working fluid inlet valve seat.

2. The liquid forced-feed apparatus of claim 1, wherein:
the working fluid deflecting device comprises a perforated member (24).

3. The liquid forced-feed apparatus of claim 1 or 2, wherein:
the working fluid inlet valve seat comprising the smallest cross-sectional area of the working fluid inlet port (6).

4. The liquid forced-feed apparatus of one of the preceding claims, further comprising: a ring-shaped member (26) mounted in the working fluid inlet port (6).

5. The liquid forced-feed apparatus of claim 4, wherein:
the ring-shaped member (26) comprises a divergent section (28) expanding in a direction of working fluid flow.

6. The liquid forced-feed apparatus of one of the preceding claims, wherein:
the working fluid deflecting device is mounted on the working fluid inlet port (6) using a coil spring (25).

7. The liquid forced-feed apparatus of one of the preceding claims, wherein:
the perforated member (24) is cylindrical.

8. A method of force feeding liquid, comprising the steps of:
- providing a vessel (1) having a working fluid inlet port (6), a working fluid outflow port (7), a liquid inflow port (8), and a liquid outflow port (9), a liquid level detecting device (3) for detecting a liquid level of a liquid surface within the vessel (1) and a changeover valve connected to the liquid level detecting device (3), the changeover valve closing the working fluid outflow port (7) when the working fluid inlet port (6) is opened, the changeover valve opening the working fluid outflow port (7) when the working fluid inlet port (6) is closed;
- feeding a liquid into the vessel (1) through the forced-feed liquid inflow port (8) to thereby provide the liquid surface;
- detecting the liquid level of the liquid surface;
- closing the working fluid outflow port (7) and opening the working fluid inlet port (6) when the liquid level is higher than a predetermined level to thereby allow a working fluid to flow into the vessel (1); and
- deflecting the working fluid flowing from the working fluid inlet port (6) away from the liquid surface, thereby preventing direct contact of the working fluid with the liquid surface within the vessel (1) when the working fluid is fed into the vessel (1) from the working fluid inlet port (6), wherein the working fluid is passed through a divergent section (28) before being deflected away from the liquid surface.

9. The method of claim 8, further comprising the step of:
dispersing liquid flowing from the working fluid inlet port (6).

10. The method of claim 9, wherein:
the dispersing step comprises passing from the working fluid inlet port (6) through a perforated member (24).

11. The method of one of the claims 8-10, wherein:
the deflecting step comprises deflecting the working fluid between a direction substantially parallel to the liquid surface and a direction which is perpendicular to, and away from, the liquid surface.

12. The method of claim 11, wherein:
the deflecting step comprises deflecting the working fluid in a direction substantially parallel to the liquid surface.

## Patentansprüche

1. Unter Druck betriebene Speisevorrichtung für Flüssigkeiten, die aufweist:
- einen Behälter (1) mit einer Arbeitsfluid-Einlassöffnung (6); einer Arbeitsfluid-Ausflussöffnung (7); einer Einflussöffnung (8) für eine unter Druck zugeführte Flüssigkeit und eine Ausflussöffnung (9) für eine unter Druck zugeführte Flüssigkeit;
- eine Flüssigkeitsstand-Detektiervorrichtung (3) zum Detektieren eines Flüssigkeitsstands einer Flüssigkeitsoberfläche in dem Behälter (1);
- ein Umsteuerventil, das mit der Flüssigkeitsstand-Detektiervorrichtung (3) verbunden ist, wobei das Umsteuerventil die Arbeitsfluid-Ausflussöffnung (7) schließt, wenn die Arbeitsfluid-Einlassöffnung (6) geöffnet ist, wobei das Umsteuerventil die Arbeitsfluid-Ausflussöffnung (7) öffnet, wenn die Arbeitsfluid-Einlassöffnung (6) geschlossen ist;
- eine Arbeitsfluid-Ablenkvorrichtung, die zwischen der Arbeitsfluid-Einlassöffnung (6) und dem Inneren des Behälters (1) angeordnet ist, wobei die Arbeitsfluid-Ablenkvorrichtung das Fluid, das von der Arbeitsfluid-Einlassöffnung von der Flüssigkeitsoberfläche weg fließt, ablenkt, wodurch ein direkter Kontakt des Arbeitsfluids mit der Flüssigkeitsoberfläche in dem Behälter (1) verhindert wird, wenn das Arbeitsfluid in den Behälter (1) von der Arbeitsfluid-Einlassöffnung (6) zugeführt wird, **dadurch gekennzeichnet, dass** die Arbeitsfluid-Ablenkvorrichtung einen Arbeitsfluid-Einlassventilkörper (19) und einen Arbeitsfluid-Einlassventilsitz aufweist, der an der Arbeitsfluid-Einlassöffnung (6) angeordnet ist, wobei die Arbeitsfluid-Einlassöffnung (6) einen divergierenden Abschnitt (28) aufweist, der stromabwärts des Arbeitsfluid-Einlassventilsitzes angeordnet ist.

2. Unter Druck betriebene Speisevorrichtung für Flüssigkeiten nach Anspruch 1, wobei die Arbeitsfluid-Ablenkvorrichtung ein perforiertes Element (24) aufweist.

3. Unter Druck betriebene Speisevorrichtung für Flüssigkeiten nach Anspruch 1 oder 2, wobei der Arbeitsfluid-Einlassventilsitz den kleinsten Querschnittsbereich der Arbeitsfluid-Einlassöffnung (6) aufweist.

4. Unter Druck betriebene Speisevorrichtung für Flüssigkeiten nach einem der vorhergehenden Ansprüche, die weiterhin aufweist: ein ringförmiges Element (26), das in der Arbeitsfluid-Einlassöffnung (6) angebracht ist.

5. Unter Druck betriebene Speisevorrichtung für Flüssigkeiten nach Anspruch 4, wobei das ringförmige Element (26) einen divergierenden Abschnitt (28) aufweist, der in Richtung des Arbeitsfluidstroms expandiert.

6. Unter Druck betriebene Speisevorrichtung für Flüssigkeiten nach einem der vorhergehenden Ansprüche, wobei die Arbeitsfluid-Ablenkvorrichtung an der Arbeitsfluid-Einlassöffnung (6) mittels einer Schraubenfeder (25) befestigt ist.

7. Unter Druck betriebene Speisevorrichtung für Flüssigkeiten nach einem der vorhergehenden Ansprüche, wobei das perforierte Element (24) zylindrisch ist.

8. Verfahren zum Zuführen einer Flüssigkeit unter Druck, das folgende Schritte aufweist:
- Bereitstellen eines Behälters (1) mit einer Arbeitsfluid-Einlassöffnung (6), einer Arbeitsfluid-Ausflussöffnung (7), einer Flüssigkeits-Einflussöffnung (8) und einer Flüssigkeits-Ausflussöffnung (9), einer Flüssigkeitsstand-Detektiervorrichtung (3) zum Detektieren eines Flüssigkeitsstands einer Flüssigkeitsoberfläche in dem Behälter (1) und ein Umsteuerventil, das mit der Flüssigkeitsstand-Detektiervorrichtung (3) verbunden ist, wobei das Umsteuerventil die Arbeitsfluid-Ausflussöffnung (7) schließt, wenn die Arbeitsfluid-Einlassöffnung (6) geöffnet ist, wobei das Umsteuerventil die Arbeitsfluid-Auslassöffnung (7) öffnet, wenn die Arbeitsfluid-Einlassöffnung (6) geschlossen ist;
- Zuführen einer Flüssigkeit in den Behälter (1) durch die Einflussöffnung (8) für eine unter Druck zugeführte Flüssigkeit, um dadurch die Flüssigkeitsoberfläche bereitzustellen;
- Detektieren des Flüssigkeitsstands der Flüssigkeitsoberfläche;
- Schließen der Arbeitsfluid-Ausflussöffnurig (7) und Öffnen der Arbeitsfluid-Einlassöffnung (6), wenn der Flüssigkeitsstand höher ist als ein vorbestimmter Stand, um hierdurch zu ermöglichen, dass ein Arbeitsfluid in den Behälter (1) fließt; und
- Ablenken des Arbeitsfluids, das von der Arbeitsfluid-Einlassöffnung (6) von der Flüssigkeitsoberfläche weg fließt, wodurch ein direkter Kontakt des Arbeitsfluids mit der Flüssigkeitsoberfläche in dem Behälter (1) verhindert wird, wenn das Arbeitsfluid in den Behälter (1) von der Arbeitsfluid-Einlassöffnung (6) zugeführt wird, wobei das Arbeitsfluid einen divergierenden Abschnitt (28) passiert, bevor es von der Flüssigkeitsoberfläche weg abgelenkt wird.

9. Verfahren nach Anspruch 8, das weiterhin den folgenden Schritt aufweist: Dispergieren der Flüssigkeit, die von der Arbeitsfluid-Einlassöffnung (6) her fließt.

10. Verfahren nach Anspruch 9, wobei der Schritt des Dispergierens die Passage von der Arbeitsfluid-Einlassöffnung (6) durch ein perforiertes Element (24) aufweist.

11. Verfahren nach einem der Ansprüche 8 bis 10, wobei der Ablenkschritt das Ablenken des Arbeitsfluids zwischen einer Richtung im Wesentlichen parallel zu der Flüssigkeitsoberfläche und einer Richtung senkrecht dazu und von der Flüssigkeitsoberfläche weg aufweist.

12. Verfahren nach Anspruch 11, wobei der Ablenkschritt das Ablenken des Arbeitsfluids in eine Richtung im Wesentlichen parallel zu der Flüssigkeitsoberfläche aufweist.

## Revendications

1. Appareil d'alimentation forcée d'un liquide, comprenant:
- un récipient (1) possédant un orifice d'entrée de fluide de travail (6), un orifice de sortie de fluide de travail (7), un orifice d'entrée d'alimentation forcée de liquide (8), et un orifice de sortie d'alimentation forcée de liquide (9) ;
- un dispositif de détection de niveau de liquide (3) pour détecter un niveau de liquide d'une surface de liquide dans le récipient (1) ;
- une valve de permutation connectée au dispositif de détection de niveau de liquide (3), la valve de permutation fermant l'orifice de sortie de fluide de travail (7) lorsque l'orifice d'entrée de fluide de travail (6) est ouverte, la valve de permutation ouvrant l'orifice de sortie de fluide de travail (7) lorsque l'orifice d'entrée de fluide de travail (6) est fermée ;
- un dispositif de déviation de fluide de travail monté entre l'orifice d'entrée de fluide de travail (6) et l'intérieur du récipient (1), le dispositif de déviation de fluide de travail déviant le fluide s'écoulant de l'orifice d'entrée de fluide de travail loin de la surface de liquide, empêchant par conséquent un contact direct du fluide de travail avec la surface de liquide dans le récipient (1) lorsque le fluide de travail est alimenté dans le récipient (1) par l'orifice d'entrée de fluide de travail (6), **caractérisé en ce que** le dispositif de déviation de fluide de travail comprend un corps de valve d'entrée de fluide de travail (19) et un siège de valve d'entrée de fluide de travail situés à l'orifice d'entrée de fluide de travail (6), l'orifice d'entrée de fluide de travail (6) comprenant une section divergente (28) située en aval du siège de valve d'entrée de fluide de travail.

2. Appareil d'alimentation forcée d'un liquide selon la revendication 1, dans lequel:
le dispositif de déviation de fluide de travail comprend une pièce perforée (24).

3. Appareil d'alimentation forcée d'un liquide selon la revendication 1 ou 2, dans lequel:
le siège de valve d'entrée de fluide de travail comprend la plus petite zone transversale de l'orifice d'entrée de fluide de travail (6).

4. Appareil d'alimentation forcée d'un liquide selon l'une des revendications précédentes, comprenant de plus:
une pièce en forme d'anneau (26) montée dans l'orifice d'entrée de fluide de travail (6).

5. Appareil d'alimentation forcée d'un liquide selon la revendication 4, dans lequel:
la pièce en forme d'anneau (26) comprend une section divergente (28) se dilatant dans une direction d'écoulement de fluide de travail.

6. Appareil d'alimentation forcée d'un liquide selon l'une des revendications précédentes, dans lequel:
le dispositif de déviation de fluide de travail est monté sur l'orifice d'entrée de fluide de travail (6) en utilisant un ressort en spirale (25).

7. Appareil d'alimentation forcée d'un liquide selon l'une des revendications précédentes, dans lequel:
la pièce perforée (24) est cylindrique.

8. Procédé d'alimentation forcée de liquide, comprenant les étapes de:
- fournir un récipient (1) possédant un orifice d'entrée de fluide de travail (6), un orifice de sortie de fluide de travail (7), un orifice d'entrée d'alimentation forcée de liquide (8), et un orifice de sortie d'alimentation forcée de liquide (9), un dispositif de détection de niveau de liquide (3) pour détecter un niveau de liquide d'une surface de liquide dans le récipient (1) et une valve de permutation connectée au dispositif de détection de niveau de liquide (3), la valve de permutation fermant l'orifice de sortie de fluide de travail (7) lorsque l'orifice d'entrée de fluide de travail (6) est ouverte, la valve de permutation ouvrant l'orifice de sortie de fluide de travail (7) lorsque l'orifice d'entrée de fluide de travail (6) est fermée ;
- alimenter un liquide dans le récipient (1) par l'intermédiaire de l'orifice d'entrée d'alimentation forcée de liquide (8) pour fournir de ce fait la surface de liquide ;
- détecter le niveau de liquide de la surface de liquide ;
- fermer l'orifice de sortie de fluide de travail (7) et ouvrir l'orifice d'entrée de fluide de travail (6) lorsque le niveau de liquide est supérieur à un niveau prédéterminé pour de ce fait permettre à un fluide de travail de s'écouler dans le récipient (1) ; et
- dévier le fluide de travail s'écoulant de l'orifice d'entrée de fluide de travail (6) loin de la surface de liquide, empêchant par conséquent un contact direct du fluide de travail avec la surface de liquide du récipient (1) lorsque le fluide de travail est alimenté dans le récipient (1) par l'orifice d'entrée de fluide de travail (6), dans lequel le fluide de travail passe au travers d'une section divergente (28) avant d'être dévié loin de la surface de liquide.

9. Procédé selon la revendication 8, comprenant de plus l'étape de :
dispersion du liquide s'écoulant de l'orifice d'entrée de fluide de travail (6).

10. Procédé selon la revendication 9, dans lequel:
l'étape de dispersion comprend le passage de l'orifice d'entrée de fluide de travail (6) au travers d'une pièce perforée (24).

11. Procédé selon l'une des revendications 8 à 10, dans lequel:
l'étape de déviation comprend la déviation du fluide de travail entre une direction essentiellement parallèle à la surface de liquide et une direction qui est perpendiculaire à, et loin de , la surface de liquide.

12. Procédé selon la revendication 11, dans lequel:
l'étape de déviation comprend la déviation du fluide de travail dans une direction essentiellement parallèle à la surface de liquide.
